# EUROPEAN PATENT APPLICATION

(11) **EP 1 617 667 A2**
(43) Date of publication of application: **18.01.2006**
(21) Application number: 05253772.7
(22) Date of filing: 17.06.2005
(51) Int. Cl.: H04N 7/16, H04N 7/173

(54) **Controlling access to broadcast content**

(30) Priority: 18.06.2004 GB 0413779; 23.06.2004 GB 0414098; 13.12.2004 GB 0427243
(71) Applicant: Top Up TV Limited, London WC1V 6XX (GB)
(72) Inventor: Markham, Nicholas Francis, East Horsley, Surrey KT24 5AG (GB)
(74) Representative: Moran, Paula

(57) **Abstract**

A system for controlling access to broadcast content in a broadcast system 2 in which the content is identified by one or more content-type descriptors that enable a receiver 4 to recognise the content and make it available to a user comprises a broadcast system 2 for broadcasting content with one or more modified content-type descriptors and a receiver 4 for receiving the broadcast content. The receiver 4 comprises a content-type descriptor translator for translating the modified content-type descriptors in order that the receiver 4 can recognise the content and make it available to the user.

## Description

### Field of the Invention

The present invention relates to controlling access to broadcast content (e.g. television video and audio content). The invention is particularly, although not necessarily exclusively concerned with controlling access to broadcast digital television channels, including digital terrestrial television ("DTT") channels and is useful for the provision of pay TV channels or "pay per view" events on these platforms.

### Background

Conditional access systems are commonly used to control access to digital television channels broadcast over satellite, cable and DTT platforms. They are generally used for pay channels (i.e. channels where a subscriber pays a one off or regular fee to access the channel content, generally for a specified time period) to ensure that only paid up subscribers can view the channel content. They can also be used to control access to channels broadcasting content that is not suitable for all audiences (e.g. pornography and gambling channels) with or without an associated payment.

Existing conditional access systems rely on a subscriber having a 'smart card' and a digital set-top box (or digital television) incorporating a smart card reader. The channel content is encrypted before it is broadcast and the subscriber's smart card contains the key to decrypt the channel content for viewing on their television.

### Summary of the Invention

It is a general aim of the present invention to provide an approach to controlling access to broadcast content (e.g. digital TV channels) that does not rely on the user having a smart card. This approach has the advantage that pay channels can be provided to DTT users who do not have a set-top box with a smart card reader.

In a first aspect, the invention provides a method for controlling access to broadcast content in a broadcast system in which the content is identified by one or more content-type descriptors that enable a receiver to recognise the content and make it available to a user, the method comprising:
broadcasting content with one or more modified content-type descriptors;
in response to a request from a user, translating the modified content-type descriptors in order that the receiver can recognise the content and make it available to the user.

Preferably, the user is provided with a content access code in response to the request and the user inputs the content access code to the receiver, the receiver using the content access code to translate the modified content-type descriptors.

In a second aspect, the invention provides a system for controlling access to broadcast content in a broadcast system in which the content is identified by one or more content-type descriptors that enable a receiver to recognise the content and make it available to a user, the system comprising:
a broadcast system for broadcasting content with one or more modified content-type descriptors; and
a receiver for receiving the broadcast content;
the receiver comprising:
   a content-type descriptor translator to translate the modified content-type descriptors in order that the receiver can recognise the content and make it available to the user.

Preferably, the receiver comprises means for receiving from a user the content access code and the content-type descriptor is adapted to respond to the content access code to translate the modified content-type descriptors.

The broadcast system may be a digital television broadcast system, for example a satellite, cable or DTT television system.

The receiver may be a digital set-top box for example (used with a television set or other display device) or a digital television, a mobile device, such as a mobile telephone or a personal digital assistant (PDA), or a personal video recorder (PVR).

The content access code is preferably provided to the user independently of the broadcast content. It may be provided, for example, by SMS text message, e.g. over a cellular telephone network, or via a computer network, such as the Internet. Similarly, the user's request for the content access code may conveniently be sent by SMS text message, by e-mail, via text to speech technology using an IVR interface or via a human agent if absolutely necessary.

The 'translation' of the modified content-type descriptors may comprise over-writing the descriptors with the appropriate non-modified descriptors. Alternatively it may comprise controlling the receiver to recognise the modified descriptors or to recognise the content itself for what it is.

The content may include audio content and/or video content and preferably includes both. Preferably, the content includes games and other interactive applications, such as betting applications. The content could also be related to pay TV, such as "pay per view" events.

The content will generally be broadcast as a channel with multiple streams (e.g. an audio stream, a video stream, a subtitle stream and a stream carrying interactivity data for iTV channels). In this case one or more, but preferably at least the video and audio streams, have modified content-type identifiers in accordance with the present invention.

In some embodiments of the invention, content with non-modified content-type descriptors (i.e. ones that can be recognised by the receiver without the need for any intervention) is broadcast alongside the content broadcast with modified content-type descriptors. In this way the content with the non-modified content-type descriptors can be played out to the user on initially selecting the channel and replaced by the content having the modified content-type descriptors when the user provides the correct content access code.

### Brief Description of the Drawing

The invention is described below, by way of example, with reference to the accompanying drawings in which:
Figure 1 schematically illustrates a DTT system that can be operated in accordance with an embodiment of the invention;
Figure 2 illustrates the process by which a user accesses content in accordance with an embodiment of the invention;
Figure 3 illustrates the process followed by a receiver operating in accordance with an embodiment of the invention; and
Figures 4 to 8 schematically show the content viewed by the user as the operate a system in accordance with an embodiment of the present invention.

### Description of an Embodiment

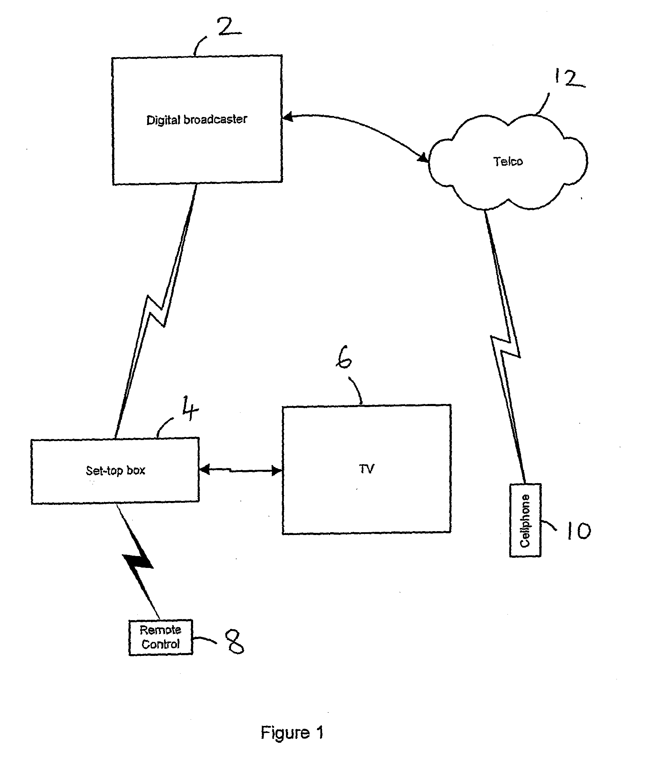

As shown in figure 1, a system in accordance with an embodiment of the invention comprises a digital broadcaster 2, which broadcasts one or more channels of content that can be received by a receiver 4, in this example a set-top box. The set-top box 4 is connected to a television set 6 via which the channel content can be viewed. The set-top box 4 is controlled by the user through a remote control unit 8 in a conventional manner.

The user also has a cellular telephone 10, which can be used in the manner described below to exchange text messages with the digital broadcaster 2 (or an associated system) via a telecommunications system 12.

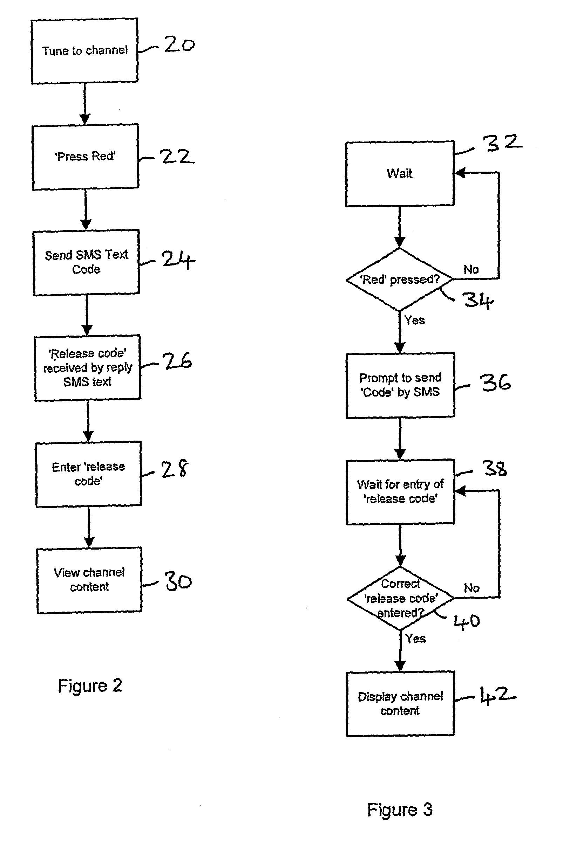

In this example, the system uses an interactive application written e.g. in MHEG1, which is loaded onto the set-top box 4 and can be used to instigate a transaction and reveal some premium content. The operation of the receiver under the control of this application is described below with reference to figures 2 and 3.

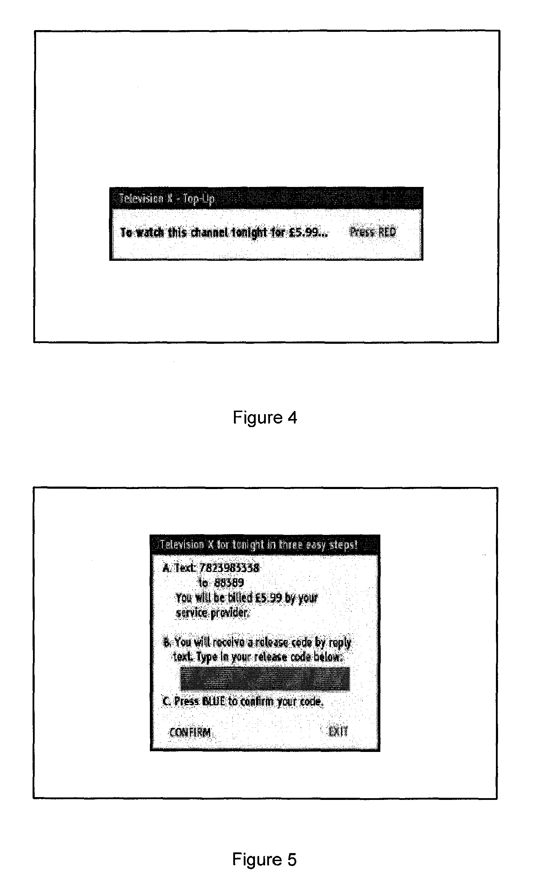

A user initially tunes the receiver to the broadcast channel carrying the content of interest 20. They are presented with a blank screen and an interactive prompt offering a chance to view the channel (see figure 4). The receiver then waits for user input 32 (in this example pressing the 'red' button on the remote control 8).

When the 'red' button is pressed 22,34 the display changes to instruct the user to send a specified code from their cell phone as an SMS text to a specified number (e.g. MSISDN or 'short code') 36 (see figure 5).

When the user sends the SMS text message as instructed 24, they are billed for the service via their mobile service provider and they receive a 'release code' in a reply SMS text message 26.

The receiver waits for the returned 'release code' to be entered by the user via their remote control 28,

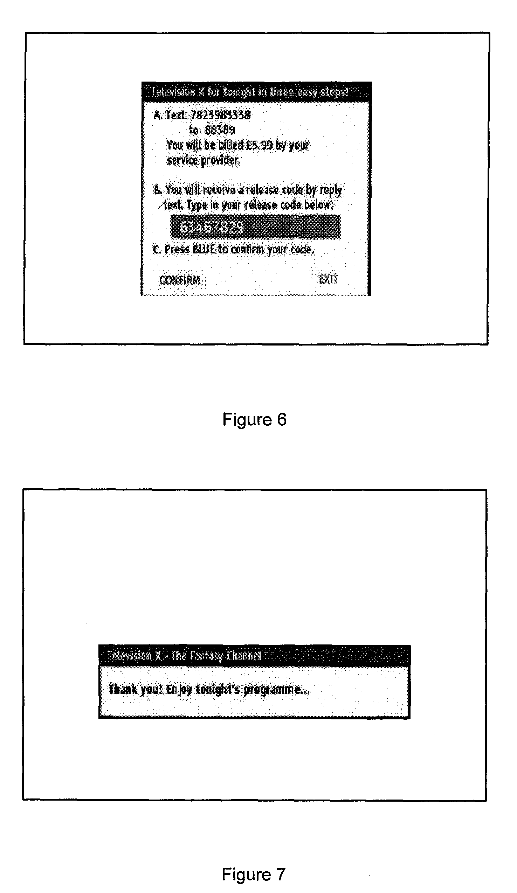

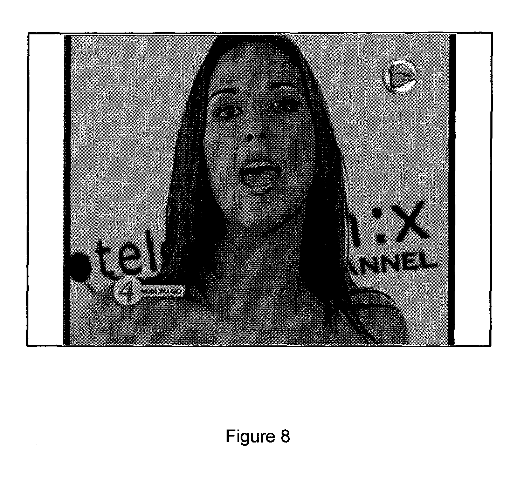

Once the release code is entered by the user 38 (also see figure 6), assuming it is the correct code 40, the display is changed to give the user confirmation that the transaction has been successful (see figure 7) and the channel content is then revealed 30,42 (see figure 8).

The embodiment described here relies on two related mechanisms to achieve the functionality described above:
1. Mechanism to display 'hidden' audio and video.
2. Mechanism to charge via algorithmic code generation.

Considering first the mechanism to display 'hidden' audio and video, it is important to understand that in a DVB (Digital Video Broadcasting - the standard for broadcasting digital television) broadcast, each 'TV channel' uses a PMT (Program Map Table) to define which video and audio streams are associated with it. A receiver (set top box) checks this table to know what to do with each associated stream (usually audio and video). In a PMT, a video stream for instance will have 'descriptors' associated with it to indicate that it is a video 'type' stream and that it has an index value (component tag) of '1'.
Typically a PMT for a TV channel may appear similar to Table 1 below. Usually, it will also contain other streams and descriptors e.g. subtitles and interactivity. These have been omitted from this example for simplicity.

**Table 1 Example of a Program Map Table (PMT) for a channel Z**

| PMT for TV Channel Z | |
|---|---|
| Video stream for Z | Stream type descriptor: Video |
| | Component tag: 1 |
| Audio stream for Z | Stream type descriptor: Audio |
| | Component tag: 2 |

By changing the descriptors to a different type, a receiver will not know what to do with the stream. For example in Table 2, the video and audio streams are not identified as video and audio by the descriptors. The receiver will not then attempt to decode these streams in the usual manner; hence they are 'hidden'.
To reveal the AV, an interactive application is used which diverts the streams to the correct decoders for presentation. Alternatively, the interactive application can operate to over-write the modified descriptors with the recognised descriptors that correctly identify the content in each stream.

**Table 2 Example of a Program Map Table (PMT) tor a channel Z with modified stream type descriptors.**

| PMT for TV Channel Z | |
|---|---|
| Video stream for Z | Stream type descriptor: Private Data |
| | Component tag: 1 |
| Audio stream for Z | Stream type descriptor: Private Data |
| | Component tag: 2 |

Building on the approach discussed above, it is also possible for the PMT to reference two sets of AV streams (see Table 3). The first set of AV streams is tagged correctly with video and audio type descriptors. Since these are tagged as video and audio, a receiver is encouraged to decode these streams as 'default'. These streams could contain advertising material or other text and images, e.g. a Teletext page, or just broadcast a black screen for example.

In this example, to reveal Video 2 and Audio 2, the interactive application directs the streams with component 3 and 4 to be decoded and presented.

**Table 3 Example of a Program Map Table (PMT) for a channel Z with modified stream type descriptors and multiple video and audio streams.**

| PMT for TV Channel Z | |
|---|---|
| Video 1 stream for Z | Stream type descriptor: Video |
| | Component tag: 1 |
| Audio 1 stream for Z | Stream type descriptor: Audio |
| | Component tag: 2 |
| Video 2 stream for Z | Stream type descriptor: Private Data |
| | Component tag: 3 |
| Audio 2 stream for Z | Stream type descriptor: Private Data |
| | Component tag: 4 |

We turn now to the second mechanism, which is to charge via algorithmic code generation. With a conventional DTT platform, there is an absence of a return path. An alternative mechanism for charging users is therefore required.

In the proposed mechanism, a user is issued a random 'ID number' or 'Code'. The desired content is only released to the user if they purchase a corresponding 'Release Code' in the manner described above.

The 'ID number' is most preferably a 'unique' number for each user, but may also simply be a random number that is generated when needed. This number (the 'release code') is arithmetically manipulated (via an algorithm) and presented to the user as his/her 'ID number'.

The user would then submit their 'ID Number' with payment, to the content provider (via SMS text message in the above example). The content provider would then apply the reverse algorithm to the 'ID Number' and return the resulting 'release code' to the user. The user inputs the release code to reveal the purchased content (using the mechanism described above).

Alternatively, in cases where there is no randomiser to generate a random number in the set-top box 4, a number that is routinely generated by the set-top box 4 is arithmetically manipulated (via an algorithm) and presented to the user as his/her 'ID number'.

In some embodiments, the interactive application writes some information (a 'token') into 'persistent storage' to indicate to the receiver that the user has purchased the content for a certain period. This will enable the user to tune away from the channel and back again without losing the access they have purchased.

It will be appreciated that the description of the embodiment above is given by way of example only and various modifications can be made to that which has been specifically described within the scope of the present invention. For example, the receiver 4 could be a mobile device, such as a mobile telephone or PDA, or a computer or PVR.

Similarly, rather than communicating with the digital broadcaster 2 via a cellular telephone 10, the user could communicate via a computer network, such as the Internet.

## Claims

1. A system for controlling access to broadcast content in a broadcast system in which the content is identified by one or more content-type descriptors that enable a receiver to recognise the content and make it available to a user, the system comprising
a broadcast system for broadcasting content with one or more modified content-type descriptors; and
a receiver for receiving the broadcast content;
the receiver comprising
a content-type descriptor translator for translating the modified content-type descriptors in order that the receiver can recognise the content and make it available to the user.

2. A system as claimed in Claim 1, wherein the receiver comprises means for receiving from a user the content access code and the content-type descriptor is adapted to respond to the content access code to translate the modified content-type descriptors

3. A system as claimed in Claim 1 or 2, wherein the broadcast system is a digital television broadcast system.

4. A system as claimed in Claim 1, 2 or 3, wherein the receiver is a digital set-top box.

5. A system as claimed in Claim 1, 2 or 3, wherein the receiver is a digital television.

6. A system as claimed in any of the preceding claims, wherein the content includes audio content and/or video content.

7. A system substantially as described herein with reference to any one of the embodiments shown in the accompanying drawings.

8. A method for controlling access to broadcast content in a broadcast system in which the content is identified by one or more content-type descriptors that enable a receiver to recognise the content and make it available to a user, the method comprising:
broadcasting content with one or more modified content-type descriptors;
in response to a request from a user, translating the modified content-type descriptors in order that the receiver can recognise the content and make it available to the user.

9. A method as claimed in Claim 8, wherein the user is provided with a content access code in response to the request and the user inputs the content access code to the receiver, the receiver using the content access code to translate the modified content-type descriptors.

10. A method as claimed in Claim 8, wherein the content access code is provided to the user independently of the broadcast content.

11. A method as claimed in Claim 10, wherein the content access code is arithmetically manipulated before being provided to the user.

12. A method as claimed in any one of Claims 8 to 11, wherein the translation of the modified content-type descriptors comprises over-writing the descriptors with the appropriate non-modified descriptors.

13. A method as claimed in any one of Claims 8 to 11, wherein the translation of the modified content-type descriptors comprises controlling the receiver to recognise the modified descriptors or to recognise the content itself.

14. A method as claimed in any of Claims 8 to 13, wherein the content includes audio and/or video content.

15. A method substantially as herein described with reference to any one of the embodiments shown in the accompanying drawings.
